# EUROPEAN PATENT APPLICATION

(11) **EP 2 154 886 A2**
(43) Date of publication of application: **17.02.2010**
(21) Application number: 09166702.2
(22) Date of filing: 29.07.2009
(51) Int. Cl.: H04N 7/16, H04N 7/24

(54) **Improved video head-end**

(30) Priority: 12.08.2008 US 190209
(71) Applicant: Nortel Networks Limited, St Laurent, Québec H4S 2A9 (CA)
(72) Inventor: McEvilly, Christopher, Bagshot, Surrey GU19 5QF (GB); Storrie, John, Maidenhead, Berkshire SL6 5DJ (GB)
(74) Representative: Mackenzie, Andrew Bryan

(57) **Abstract**

The present invention provides an improved video head-end. The video head-end is adapted to, upon receipt of a data stream including interactive data, identify the interactive data and extract the interactive data from the data stream. Once the interactive data has been extracted from the data stream it can be translated into a different language. The different language being one that an endpoint in a television network can process. Once the interactive data has been translated it can be transmitted, along with any other data that formed part of the data stream the television network.

## Description

### FIELD OF THE INVENTION

This invention relates to apparatus for enabling interactive applications to be accessed using different provider middleware. The invention is applicable to use within a video head-end in a television network.

### BACKGROUND OF THE INVENTION

In a television broadcast a signal, representative of an interactive television programme, is transmitted to one or more devices. Each device, upon receiving the television signal, processes the signal and displays the interactive television programme as an electronic program guide or an overlay on a user interface such as a screen. In order for the device to successfully display the interactive television programme it has to be able to successfully decode and process the data encoding the interactive application.

In recent years many different types of devices, such as mobile telephones, televisions, or computers, have become capable of displaying television programmes. Additionally, there has been a growth in the number of platforms used to provide television, with each television provider using a proprietary platform.

This has been further complicated by the development of interactive television which has been enabled by digital television signals where interactive applications are embedded either directly or indirectly into the television stream. Interactive television allows a user of a device to interact with the device beyond the traditional choosing of channels, for example, to interact with a games show by voting on their favourite act or to indicate a request for further details from an advert. Information provided by a user is sent back to the provider using a "return path" which may be any suitable path, for example, by telephone, mobile SMS (text messages), radio, digital subscriber lines or cable.

However, each television provider will enable the functionality of interactive television on a proprietary level with coding unique to a television platform being required to access the interactive services. This means that, for each platform, the coding for each interactive programme has to be in the language which allows it to be displayed by the platform's digital set-top box, decoder's operating system or application environment. In order to achieve this currently the coding for a television programme is manually written for each television platform on which the interactive application will be processed. This is costly and can result in different user experience or behaviours across the different television platforms.

Additionally, devices that connect to a television platform that is not part of the television programme provider's core platform may not be able to access the interactive television functionality. For example when a Interactive television program is carried on a platform without support for the interactivity, the consumer will see the prompts but will not be able to action them.

### SUMMARY OF THE INVENTION

According to an aspect of the present invention there is provided a device comprising a receiver to receive a data stream from a network, the data stream including interactive data and other data, an extractor to identify and extract interactive data from the data stream, a translator to convert the extracted interactive data from a first language to a second language and at least one transmitter for sending the interactive data and other data across the network. By extracting and converting interactive data encoding an interactive television programme between a first and second language the device enables a interactive user to be presented with the interactive programme even if their viewing apparatus has a platform which does not support the operating environment that the interactivity was created in. This reduces the reliance on data for interactive programmes being provided by the television programme provider in a format that can be processed by the apparatus.

The device may include a buffer to store the other data to allow a short period for the conversion process before multiplexing the new interactive data and the other data. This allows the interactive data to be re-multiplexed together with the existing data allowing apparatus receiving the transmitted data to process the interactive data in the usual manner. The other data is data transmitted in the same channel as the interactive data and can be, for example, video or audio data.

The device may also include a cache configured to store the interactive data in the second language. The cache may also store the interactive data in the first language. This means that the device will not have to translate code if it is the same as that for a previously received application.

Optionally, the device may further include a processor to identify the extracted interactive data, determine whether the interactive data in the second language is present in the cache, and if the interactive data is present in the second language provide the cached interactive data to the at least one transmitter. In this way multiple translations of the same interactive data, for example interactive data associated with adverts, can be avoided.

Optionally, data may be processed prior to transmitting it to other apparatus in the television network. The processing may involve, for example, remodulating the data.

Optionally, the interactive data may not be automatically transmitted with the other data but rather is transmitted when a request for the interactive data is received by the device. The request may either cause the interactive data in the first code to be translated or interactive data to be retrieved from the cache.

The interactive data may be associated with video data, audio data or any other type of data. The other data may encode a television programme and, in this instance, the interactive data enables user interaction with the television programme.

The first language and second languages may be is any one of MHEG-5, HTML, OpenTV, MHP or NDS.

Preferably the device is a video head-end.

The device may also include a multiplexer to combine the interactive application/data into the TV program before sending the interactive data and other data across the network. This allows the apparatus receiving the interactive data to process the interactive data in the usual manner.

This multiplexing of interactive data with the data with which it was received may be achieved by providing the interactive data and other data with identifiers, such as time information. Alternatively, the other data may be held in the buffer for a predetermined amount of time. The predetermined amount of time being equal to the time required to convert the interactive data from the first language to the second language.

According to another aspect of the present invention there is provided a method for supplying interactive data to an endpoint in a television network, the method comprising the steps of: receiving a data stream from a network, the data stream including interactive data and other data identifying and extracting the interactive data from the data stream converting the extracted interactive data from a first language to a second language and sending the interactive data and other data across the network.

### BRIEF DESCRIPTION OF THE DRAWINGS

Other aspects and features of the present invention will become apparent to those ordinarily skilled in the art upon review of the following description of specific embodiments of the invention in conjunction with the accompanying figures.
Figure 1 illustrates the apparatus of the present invention;
Figure 2 is a flow diagram of a method in accordance with the present invention; and
Figure 3 is a flow diagram of a further method in accordance with the present invention.

### DETAILED DESCRIPTION OF PREFERRED EMBODIMENTS

The present invention is described with reference to a digital television signal and the video data encoded in such a signal. One skilled in the art, however, will understand that the method described may be applied to any other data encoded in a digital signal, for example, audio data.

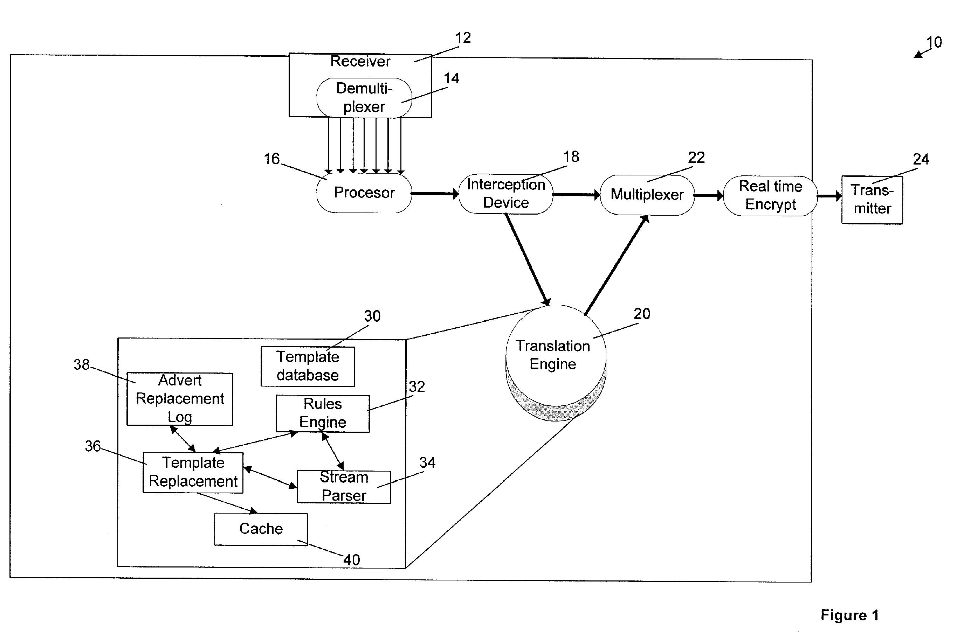

A video head-end 10 in accordance with the present invention is illustrated in Figure 1. The video head-end 10 includes a receiver 12 that is configured to receive a television signal that has been transmitted across a television network. The television signal includes both video data and interactive data encoding an interactive application for an interactive television programme.

The video head-end 10 further includes a demodulator 14, which may be separate from or integral with the receiver 12. The demultiplexer 14 is arranged to demultiplex the signal received by the receiver 12. Once the signal has been demultiplexed it is passed to a processor 16 which prepares the signal for transmission to endpoint devices, such as a television, which display television programmes. The processor 16 may include an encoder and/or a groomer to process each of the television programme signals.

The video head-end 10 further includes an interception device 18. The interception device 18 is situated in the path between the processor 16 and a transmitter 24 of the video head-end 10. The interception device 18 is arranged to receive data from the processor 18, identify interactive data and pass interactive data to a translation engine 20.

Any data that is not interactive data, for example video data, is passed to a multiplexer 22 for processing as discussed below. The video head-end 10 also includes a processor for encrypting data before it is sent over a television network from a transmitter 24.

The translation engine 20 includes a database of templates 30, a database of rules (not shown), a rules engine 32, a stream parser 34, template replacement log 36, an advert replacement log 38 and a cache 40 for storing translated interactive data. The templates, and rules are used to translate interactive data. The rules may be in the form of an application, metadata or a mixture.

As will be understood by one skilled in the art the video head-end may be implemented in any suitable arrangement. For example, the video head-end may be implemented on one or more servers.

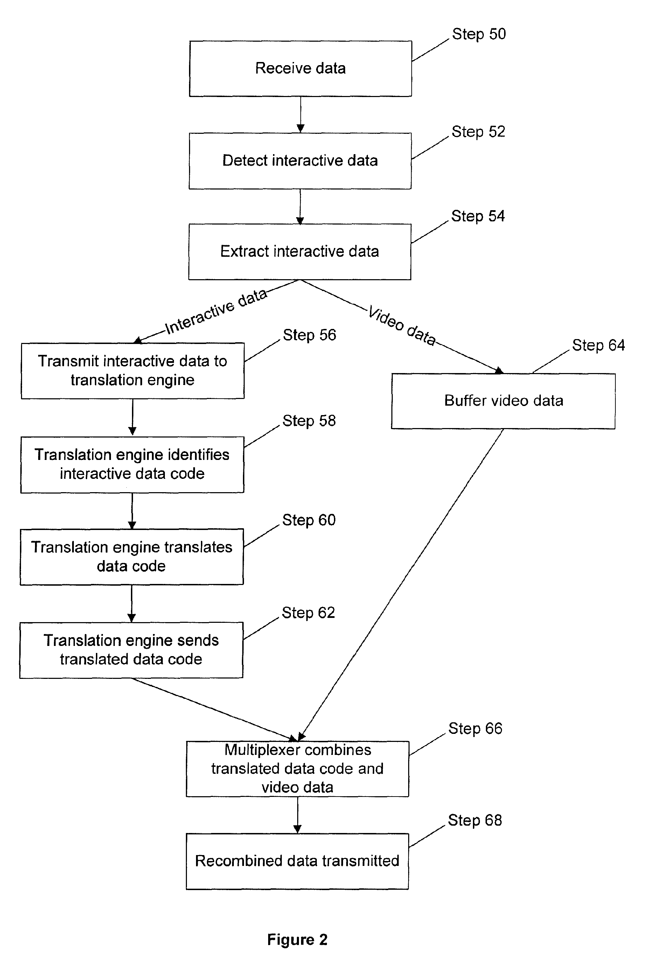

The method of operation of the video head-end will now be described with reference to Figures 1 and 2. In use, the video head-end 10, receives a signal including video data for multiple television programmes at the receiver 12 (Step 50). The data within the received signal is demultiplexed by the demultiplexer 14 and passed to a processor 16 for preparing for transmission to an endpoint.

As discussed above, an interception device 18 is present in the path between the processor 16 and transmitter 24. The interception device 18 analyses the data stream flowing through to the transmitter 24 and identifies interactive data encoding interactive applications present within the stream (Step 52). The interactive data is then extracted from the data (Step 54) and sent to the translation engine. The remaining data that is not interactive data, for example video data, is passed to a buffer (not shown) where it is buffered (Step 64).

The translation engine 20, upon receiving the interactive data, identifies templates and one or more rules that determine how the rules engine of the translation engine will translate the interactive data (Step 58). Once the programming language has been identified the interactive data can be translated into a second programming language (Step 60). The second programming language is the language in which the interactive data is transmitted from the video head-end 10 and is a programming language that enables the interactive data to be correctly displayed at an endpoint using the platform associated with the video head-end

The translation is carried out in accordance with rules present within the rules engine 32 using the templates for interactive data stored in the template database 30 within the translation engine 20.

Once the interactive data has been translated into the second programming language the translated interactive data is sent by the translation engine 20 to a multiplexer 22 (Step 62). The multiplexer combines the interactive data with the data that has been buffered to form a single data stream (Step 66). After the data has been multiplexed into a single stream it can be transmitted across the television network (Step 68).

An example of translation of interactive data is described below. The interactive data is received in the MHEG-5 programming language and comprises the following code:

```
 (scene:Nortel 1
 <other scene attributes here>
 group-items:
   (bitmap: Nortellnfo
    content-hook: #Nortellnfo
    original-box-size: (320 240)
    original-position: (0 0)
```

```
    content-data: referenced-content: "Nortellnfo"
   )
   (text:
    content-hook: #Norteltext
    original-box-size: (280 40)
    original-position: (50 50)
    content-data: included-content: "1. Press 1 to proceed..."
   )
   links:
    (link: Link1
     event-source: Nortellnfo1
     event-type: #Userlnput
     event-data: #1
     link-effect: action: transition-to: Nortellnfo2
    )
 )
```

For the MHEG-5 code is to be translated into HTML so that it can readily be displayed on a web browser, the translation engine retrieves a template for an HTML page of interactive data from the template database. The template may have the following structure:

```
 <html>
 <head>
 <title></title>
 </head>
```

```
 <body>
 <img>
 <input type>
 </form>
 </NOFRAMES>
 </body>
 </html>
```

The translation engine identifies the parts of the MHEG-5 code which are to be inserted into the relevant parts of the HTML code. For example, the translation engine identifies an image referenced in the MHEG-5 data as Nortellnfo. It then places the information for the image i.e. Nortellnfo into the associated part of the HTML code. This is repeated for all the parts of the code and, in this way the HTML template is populated so that the same menu is displayed by the HTML code. The populated HTML code is displayed below:

```
 <html>
 <head>
 <title>Nortel Input</title>
 </head>
 <body>
 <img src="Nortellnfo">
```

```
 Nortelinput:
```

```
 <input type="text" Nortelinput="1. Press 1 to proceed">
```

```
 </form>
 </NOFRAMES>
 </body>
 </html>
```

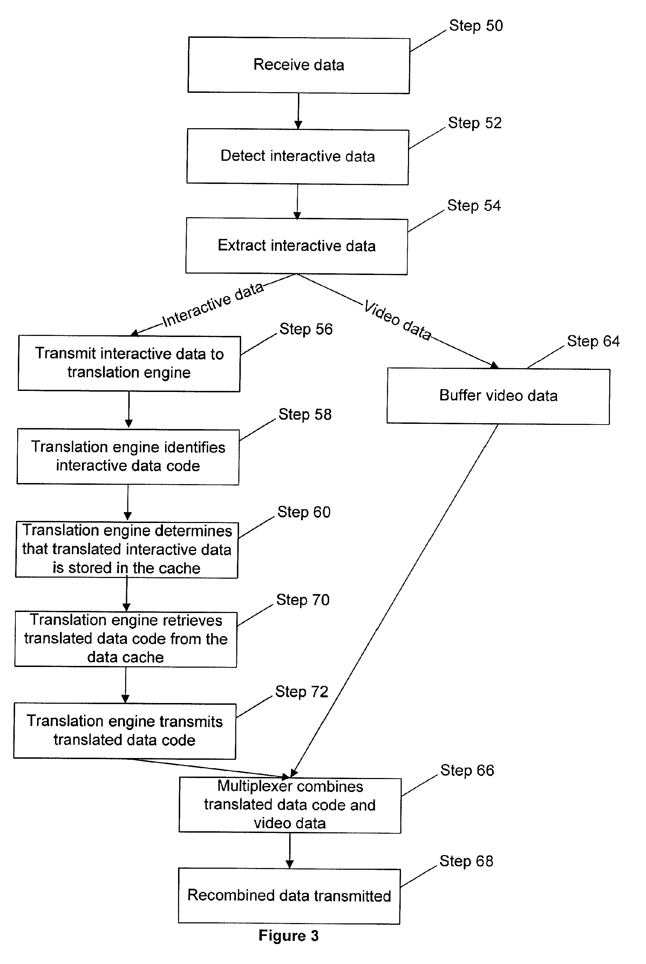

Once the translation has been completed the translated interactive data may be stored in the translation engine cache with identifiers. This enables translated interactive data to be readily retrieved by the translation engine at a later date as illustrated in Figure 3.

Figure 3 illustrates a method for providing translated interactive data when the interactive data has previously been translated by the translation engine. In this method steps 50 to 58 are as previously described with reference to Figure 2. Upon receiving the interactive data code the translation engine determines that the interactive data has previously been translated by the translation engine and that a copy of the translated interactive data is stored in the cache (step 70). The translation engine then retrieves the copy of the translated interactive data from the cache (Step 72). The interactive data is then forwarded to the multiplexer and transmitted across the television network as described with reference to Figure 2.

The video data and interactive data may be provided with timing information or other reference information to ensure that the interactive data is multiplexed with the video data that it was received with.

Optionally, the video head-end may also include a demodulator to demodulate any modulated data that is received, for example, using a cable. Additionally, the video head-end may also include a re-encoder in association with the multiplexer to re-encode data.

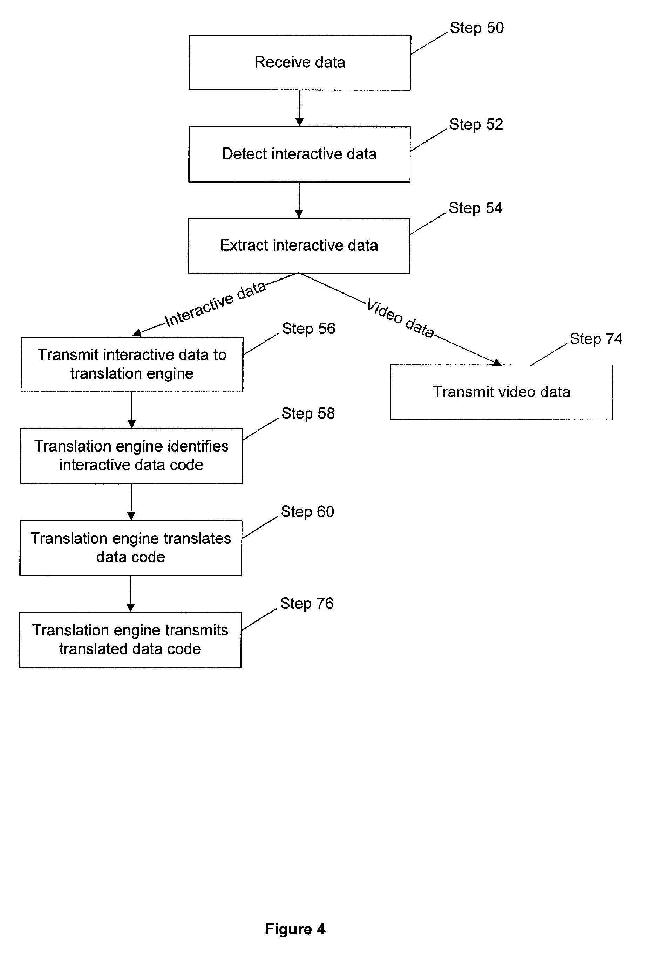

Figure 4 illustrates an alternative method for translating the language of the interactive data. In this method Steps 50 to 60 are as described with reference to Figure 2. However, data that is not interactive data, such as video data, is transmitted to an endpoint after interactive data has been extracted from the video data (Step 74).

The translated code for the interactive data is then transmitted to the endpoint as soon as it is translated (Step 76). The data is sent to the endpoint without recombining the data and interactive data to form a single data stream. The endpoint, upon receiving data, identifies the interactive data and other data in order to enable the display of the other data with the associated bit of interactive data. For example, the video and interactive data may be provided with timing information or other reference information enabling an endpoint to determine which video and interactive data should be displayed at the same time.

Although the present invention has been described with reference to a translation from MHEG-5 to HTML the skilled person will understand that other programming languages for interactive data may also form the basis of the translation. For example, the interactive data may be received in or translated into OpenTV, MHP, NDS or any other language suitable for encoding interactive data.

Additionally, rather than transmitting all translated interactive data to an endpoint the translation engine may cause a trigger to be transmitted to the endpoint. Further translated interactive data can then be transmitted to the endpoint in response to a user request for interactive services from the endpoint.

The advert log may record preferences for endpoints. The translation engine may then cause adverts to be transmitted to the endpoint that are associated with adverts for which interactive data has been requested from the consumer.

## Claims

1. A device comprising:
(a) a receiver to receive a data stream from a network, the data stream including interactive data and other data;
(b) an extractor to identify and extract interactive data from the data stream
(c) a translator to convert the extracted interactive data from a first language to a second language; and
(d) at least one transmitter for sending the interactive data and other data across the network.

2. A device as claimed in Claim 1 wherein the device further includes a multiplexer to combine the interactive data in the second language and the other data before sending the interactive data and other data across the network.

3. A device as claimed in Claim 2 wherein the device further includes a buffer to store the other data before multiplexing the interactive data and the other data.

4. A device as claimed in Claim 2 or Claim 3 wherein the device is further arranged to provide the interactive data and other data with an identifier enabling the interactive data to be displayed with the other data it was received with.

5. A device as claimed in Claim 4 wherein the identifier is timing information.

6. A device as claimed in any preceding claim wherein the device further includes a cache configured to store the extracted interactive data in the first language or the second language.

7. A device as claimed in Claim 6 wherein the device further includes a processor to identify the extracted interactive data, determine whether the interactive data in the second language is present in the cache, and if the interactive data is present in the second language provide the cached interactive data to the at least one transmitter.

8. A device as claimed in any preceding claim further including processing means to groom the data prior to transmitting it to the endpoint.

9. A device as claimed in any preceding claim wherein the interactive data is transmitted across the network in response to a request for interactive data received from another device in the network.

10. A device as claimed in any one of Claims 6 to 9 wherein the device identifies the interactive data specified in the request, determines whether the interactive data in the second language is present in the cache, and, if the interactive data is present in the second language, provide the cached interactive data to the at least one transmitter..

11. A device as claimed in any preceding claim wherein the other data is one of the group comprising video data and audio data.

12. A device as claimed in any preceding claim wherein the other data encodes a television programme and the interactive data enables user interaction with the television programme.

13. A device as claimed in any preceding claim wherein the first or second language is any one of the group comprising MHEG-5, HTML, OpenTV, MHP and NDS.

14. A device as claimed in any preceding claim wherein the device is a video head-end.

15. A method for supplying interactive data to an endpoint in a television network, the method comprising the steps of:
(a) receiving a data stream from a network, the data stream including interactive data and other data;
(b) identifying and extracting the interactive data from the data stream
(c) converting the extracted interactive data from a first language to a second language; and
(d) sending the interactive data and other data across the network.
